(19) **Europäisches Patentamt / European Patent Office / Office européen des brevets**

(11) **EP 2 604 818 B1**

(12) **FASCICULE DE BREVET EUROPEEN**

(45) Date de publication et mention
de la délivrance du brevet:
**08.04.2015 Bulletin 2015/15**

(51) Int Cl.:
***F01N 9/00*** *(2006.01)*      ***F01N 11/00*** *(2006.01)*

(21) Numéro de dépôt: **12193880.7**

(22) Date de dépôt: **22.11.2012**

(54) **Procédé et dispositif de determination de la criticité de l'encrassement d'un filtre à particules vis-a-vis de la puissance pour un moteur à combustion interne**

Verfahren und Vorrichtung zur Bestimmung des kritischen Zustands der Verschmutzung eines Partikelfilters in Bezug auf die Leistungsfähigkeit eines Verbrennungsmotors

Method and device for determining the criticality of the clogging of a particle filter with respect to the power of an internal combustion engine

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2011 FR 1161736**

(43) Date de publication de la demande:
**19.06.2013 Bulletin 2013/25**

(73) Titulaire: **PEUGEOT CITROËN AUTOMOBILES SA 78140 Velizy-Villacoublay (FR)**

(72) Inventeur: **Faure, Sebastien 92500 Rueil Malmaison (FR)**

(56) Documents cités:
**EP-A1- 1 209 333      EP-A1- 2 261 474**
**US-A1- 2011 146 246**

Printed by Jouve, 75001 PARIS (FR)

**Description**

La présente invention concerne un procédé et un dispositif de détermination de l'impact de l'augmentation de la perte de charge d'un filtre à particules dû à son encrassement sur la puissance moteur à combustion interne.

Dans le domaine de l'automobile, un moteur à combustion interne est associé à une ligne d'échappement. Du fait des normes antipollution très strictes, il est connu de ménager un filtre à particules dans la ligne d'échappement, notamment dans la ligne d'échappement des moteurs Diesel. Ce filtre à particules filtre les suies et autres particules présentes dans les gaz d'échappement, pour éviter que celles-ci soient rejetées dans l'atmosphère.

Toutefois, du fait de ce filtrage, le filtre à particules se charge en particules. Il s'en suit une augmentation de la contre-pression du filtre à particules sur les gaz d'échappement. Le filtre à particules doit alors être régénéré pour évacuer les particules filtrées, après que celles-ci aient été brulées.

Parallèlement, le filtre à particules subit également un encrassement irréversible, notamment dû aux cendres provenant du lubrifiant moteur, des usures de la ligne d'échappement amont et moteur ou encore à des oxydes d'additif dans le cas d'un filtre à particules additivé (c'est-à-dire un filtre à particules dans lequel les particules à régénérer contiennent une certaine proportion d'oxydes - provenant de la combustion d'un carburant additivé, cérine ou autre produit, dont le but est d'accélérer de manière significative leur vitesse de combustion à des températures de l'ordre de 450°C).

Cet encrassement irréversible se traduit par une dérive de la contre-pression du filtre à particules sur les gaz d'échappement, qui nuit aux performances du moteur.

Il est connu de remplacer le filtre à particules lorsqu'un encrassement estimé a atteint un seuil. Le franchissement de ce seuil peut par exemple provoquer l'apparition d'un code défaut, soit provoquant directement l'allumage d'un voyant sur le tableau de bord du véhicule automobile pour prévenir l'utilisateur qu'il doit se rendre dans un garage, soit enregistré dans l'unité électronique et uniquement visible par les outils diagnostiques disponibles en garage Une fois en garage, le changement du filtre à particules peut être avéré ou non.

Ce seul critère du dépassement d'un seuil par estimation présente cependant une certaine imprécision qui provoque le retour de véhicule dont le filtre à particules ne doit pas forcément être changé (c'est-à-dire que le filtre à particules est changé trop tôt). Au contraire, dans certain cas, une panne intervient avant que le filtre à particules n'ait été changé (c'est-à-dire que filtre à particules est changé trop tard).

Par ailleurs, il est connu de FR-A-2 927 363 un diagnostic d'un filtre à particules basé sur une comparaison entre la température du filtre à particules et la température des gaz d'échappement en entrée. Une droite est réalisée par interpolation linéaire en fonction du chargement en suie. Cette droite évolue en fonction de l'état de dégradation du filtre à particules. Cependant, ce procédé présente également une relative imprécision.

Il est également connu de WO-A-99/23 369 un diagnostic pour évaluer la performance d'un filtre à particule par régression linéaire. Le procédé proposé dans cette demande est cependant complexe. Le document US 2011/0146246 A1 divulgue également un procédé de diagnostic similaire.

Il existe donc un besoin pour un procédé de détermination de l'encrassement du filtre à particules plus précis et plus fiable, tout en restant simple de mise en oeuvre.

L'invention propose un procédé de détermination de la criticité de la perte de charge, dû à son encrassement, d'un filtre à particules ménagé dans la ligne d'échappement d'un moteur à combustion interne, **caractérisé en ce qu'il** comprend les étapes successives suivantes :

a) détermination d'une courbe de perte de charges du filtre à particules en fonction du débit volumique de gaz d'échappement traversant le filtre à particules,

b) détermination du point d'intersection de la courbe de perte de charge avec une courbe de charge du moteur, de préférence une courbe de pleine charge,

c) comparaison de la perte de charge du point d'intersection avec une perte de charge seuil.

Selon une variante, l'étape a) est mise en oeuvre après une étape de régénération du filtre à particules.

Selon une variante, l'étape a) est mise en oeuvre périodiquement, après un nombre déterminé de régénérations du filtre à particules.

Selon une variante, l'étape de régénération peut présenter soit une première durée, soit une deuxième durée, plus longue que la première durée, et l'étape a) est mise en oeuvre après une étape de régénération d'une deuxième durée.

Selon une variante, l'étape a) comprend les sous-étapes consistant à :

aa)déterminer des couples de perte de charge en fonction du débit volumique de gaz d'échappement traversant le filtre à particules,

ab)déterminer la courbe de perte de charge par régression linéaire du type :

$$\Delta P = A.Q_{vol}^2 + B.Q_{vol} ,$$

où $\Delta P$ représente la perte de charge, $Q_{vol}$ le débit volumique de gaz d'échappement traversant le filtre à particules et A et B des constantes à déterminer par régression linéaire.

Selon une variante, pour déterminer la courbe de perte de charge par régression linéaire, on détermine des couples successifs de pertes de charge en fonction du débit volumique de gaz d'échappement traversant le filtre à particules $Q_{vol_i};\Delta P_i$, et pour chaque couple $Q_{vol_n};\Delta P_n$, on détermine les coefficients $A_n$ et $B_n$ correspondant, par exemple en appliquant les équations suivantes :

$$A_n = \frac{n \cdot \sum \Delta P_i - \sum Q_{vol_i} \cdot \sum \left(\Delta P_i / Q_{vol_i}\right)}{n \cdot \sum Q_{vol_i}^2 - \left(\sum Q_{vol_i}\right)^2} ,$$

et

$$B_n = \frac{\left(\sum Q_{vol_i}^2\right) \cdot \sum \left(\Delta P_i / Q_{vol_i}\right) - \sum Q_{vol_i} \cdot \sum \Delta P_i}{n \cdot \sum Q_{vol_i}^2 - \left(\sum Q_{vol_i}\right)^2} .$$

Selon une variante, pour chaque couple de coefficients $A_n$, $B_n$, on détermine le point d'intersection de la courbe de perte de charge correspondante avec la courbe de charge moteur.

Selon une variante, la courbe de charge moteur est de la forme $\Delta P = \dfrac{C}{Q_{vol}} + D$ où C et D sont des constantes.

Selon une variante, le point d'intersection de chaque courbe de perte de charge avec la courbe de charge moteur est déterminé en résolvant, par exemple au moyen des formules de Cardan, l'équation :

$$A_n \cdot Q_{vol}^3 + B_n \cdot Q_{vol}^2 - D \cdot Q_{vol} - C = 0 .$$

L'invention propose en outre un dispositif de détermination de l'état d'encrassement d'un filtre à particules d'une ligne d'échappement d'un moteur de véhicule automobile, comprenant :

- des moyens de détermination de la perte de charge dans le filtre à particules en fonction du débit volumique de gaz d'échappement traversant le filtre à particules,

- une unité électronique de commande reliée fonctionnellement aux moyens de détermination et spécialement adaptée pour mettre en oeuvre le procédé selon l'une quelconque des revendications précédentes.

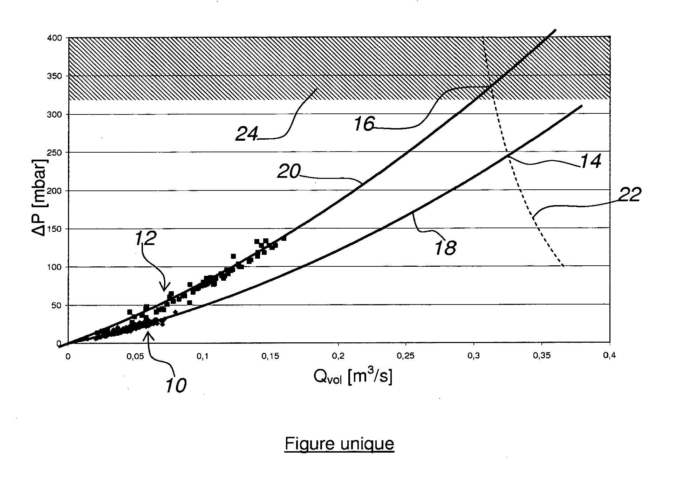

D'autres caractéristiques et avantages de l'invention apparaîtront à la lecture de la description détaillée qui suit d'un mode de réalisation de l'invention, donnés à titre d'exemple uniquement et en références à la figure unique qui représente schématiquement des courbes de perte de charge dans un filtre à particules et une courbe de charge moteur, en fonction du débit volumique de gaz d'échappement traversant le filtre à particules.

L'invention se rapporte à un procédé de détermination de l'état d'encrassement d'un filtre à particules ménagé dans la ligne d'échappement d'un moteur à combustion interne, notamment un moteur Diesel, d'un véhicule automobile.

Ce procédé comprend une première étape de détermination d'une courbe de perte de charges du filtre à particules en fonction du débit volumique de gaz d'échappement traversant le filtre à particules.

Cette première étape est de préférence mise en oeuvre après une régénération du filtre à particules. Ceci permet en effet de réaliser cette détermination alors que le filtre à particules est peu chargé en suies et autres particules qui augmentent la perte de charge dans le filtre à particules. Une régénération correspond à une ou plusieurs injections tardives de carburant, éventuellement mélangé à un additif visant à réduire la température de combustion des suies dans le filtre à particules. L'additif peut comprendre de la cérine. On entend par injection tardive une injection de carburant postérieure à l'explosion du mélange air/carburant, au point mort haut du piston. Ces injections tardives permettent d'augmenter la température des gaz d'échappement qui brûlent ainsi les suies présentes dans le filtre à particules.

Pour limiter encore l'effet de ces suies sur la perte de charge dans le filtre à particules, cette première étape est réalisée après une régénération « complète » ou « provoquée complète ». Une régénération complète est une régénération réalisée durant un temps assez long (traditionnellement de l'ordre de 10 à 20 minutes selon le profil de roulage), plus long qu'une régénération classique. Une régénération classique a une durée plus limitée - traditionnellement de l'ordre de 5 à 15 minutes selon le profil de roulage - pour éviter ou tout du moins limiter la dilution de carburant dans l'huile du moteur. Afin de permettre la réalisation de stratégies demandant l'absence de particules dans le filtre à particules, une régénération complète peut être commandée régulièrement (toutes les 10 régénérations, par exemple). Une régénération complète est de préférence commandée quand le véhicule automobile est dans des conditions de circulation favorables. Des conditions favorables sont notamment obtenues lorsque le véhicule automobile roule à un rythme régulier et soutenu, comme sur une autoroute par exemple. Au contraire, une régénération complète est à éviter lorsque les conditions de circulation sont défavorables, ce qui est notamment le cas lorsque le véhicule roule à faible allure, avec un rythme irrégulier, comme en ville par exemple. Ces conditions favorisent en effet la dilution de carburant injecté tardivement dans l'huile moteur. Une régénération complète peut cependant être commandée, malgré ces conditions de circulation défavorables, dans le cas où le filtre à particules est particulièrement encrassé. On parle alors de « régénération provoquée complète ».

La détermination de la courbe de perte de charges du filtre à particules peut être réalisée en mesurant, pour deux débits volumiques distincts, la perte de charge du filtre à particules correspondant, en cherchant une équation de la forme :

$$\Delta P = A.Q_{vol}^2 + B.Q_{vol} \qquad (1)$$

où $\Delta P$ est la perte de charge dans le filtre à particules correspondant au débit volumique $Q_{vol}$ de gaz d'échappement traversant le filtre à particules, et A et B deux constantes à déterminer.

Cependant, pour améliorer la précision du procédé, on détermine des couples successifs $P_n$, $Q_{vol\,n}$ de perte de charge en fonction du débit volumique de gaz d'échappement traversant le filtre à particules. Ces couples sont de préférence filtrés selon des critères de stabilité et de limite dans le temps, pour éviter que le filtre à particules ne se recharge en particules. Ces couples forment les nuages de points 10, 12 visibles sur la figure qui correspondent à deux séries de couples successifs déterminés après 9 000 km et 230 000 km, respectivement.

Pour chaque nouveau couple, on cherche les coefficients $A_n$ et $B_n$ correspondant de l'équation (1')

$$\Delta P_n = A_n.Q_{vol\,n}^2 + B_n.Q_{vol\,n} \qquad (1')$$

qui sont donnés par :

$$A_n = \frac{n \cdot \sum \Delta P_i - \sum Q_{vol_i} \cdot \sum \left( \Delta P_i / Q_{vol_i} \right)}{n \cdot \sum Q_{vol_i}^2 - \left( \sum Q_{vol_i} \right)^2}, \qquad (2)$$

$$B_n = \frac{\left( \sum Q_{vol_i}^2 \right) \cdot \sum \left( \Delta P_i / Q_{vol_i} \right) - \sum Q_{vol_i} \cdot \sum \Delta P_i}{n \cdot \sum Q_{vol_i}^2 - \left( \sum Q_{vol_i} \right)^2} \qquad (3)$$

où :

- n est le nombre de couples déterminés, et
- i un entier compris entre 1 et n.

Les suites $A_n$ et $B_n$ convergent vers les valeurs théoriques de A et B de l'équation (1).

Le procédé se poursuit alors par la détermination du point d'intersection 14, 16 de la courbe de perte de charge 18, 20 avec une courbe de charge moteur 22, de préférence de charge moteur maximale. La charge est le rapport du travail apporté par le moteur à un certain régime sur le travail maximal envisageable à ce régime. En l'espèce, la charge est représentée par la pression moyenne effective, définie comme l'énergie mécanique (travail) par litre de cylindrée.

La courbe de charge moteur peut être déterminée sous la forme :

$$\Delta P = \frac{C}{Q_{vol}} + D \qquad\qquad (4)$$

où C et D sont des constantes. Une telle équation peut être enregistrée dans un calculateur de véhicule automobile adapté à mettre en oeuvre le procédé de détermination de l'état d'encrassement du filtre à particules.

En variante, pour chacun des couples de perte de charge et de débit volumique, on détermine l'équation de la perte de charge en fonction du débit volumique, puis on détermine le point d'intersection de cette courbe avec la courbe correspondant à l'équation (4). Le débit volumique correspondant à ce point d'intersection est donné par l'équation :

$$A_n \cdot Q_{vol}^3 + B_n \cdot Q_{vol}^2 - D \cdot Q_{vol} - C = 0 \,. \qquad\qquad (5)$$

Cette équation de degré trois peut être résolue, notamment au moyen des formules de Cardan. Cette résolution peut être réalisée par l'unité électronique mettant en oeuvre le procédé. D'autres moyens de résolution de l'équation (5) peuvent bien entendu être utilisés. On peut ensuite déterminer la perte de charge des courbes, correspondant au débit volumique déterminé en résolvant l'équation (5).

Le procédé se poursuit alors par la comparaison de cette perte de charge du point d'intersection 14, 16 avec une perte de charge maximale acceptée, représentée sur la figure par la zone hachurée 24. La perte de charge maximale acceptée peut par exemple correspondre au seuil au dessus duquel la perte de charge dans le filtre à particules provoque une perte de puissance maximale du moteur qui n'est pas acceptée. Si la perte de charge du point d'intersection des courbes est supérieure à cette perte de charge maximale acceptée, alors on détermine qu'il convient de remplacer le filtre à particules.

Il est à noter que le procédé peut être mis en oeuvre sans avoir à atteindre la pleine charge moteur. Il suffit de déterminer des couples de perte de charge et de débit volumique même pour de faibles débits volumiques.

Le procédé peut notamment être mis en oeuvre par un dispositif de détermination de l'état d'encrassement d'un filtre à particules d'une ligne d'échappement d'un moteur de véhicule automobile, comprenant des moyens de détermination de la perte de charge dans le filtre à particules en fonction du débit volumique de gaz d'échappement traversant le filtre à particules et une unité électronique de commande reliée fonctionnellement aux moyens de détermination et spécialement adaptée pour mettre en oeuvre les étapes du procédé décrites ci-dessus dans toutes leurs variantes

**Revendications**

1. Procédé de détermination de l'état d'encrassement d'un filtre à particules ménagé dans la ligne d'échappement d'un moteur à combustion interne, **caractérisé en ce qu'il** comprend les étapes successives suivantes :

   a) détermination d'une courbe (18 ; 20) de perte de charges du filtre à particules en fonction du débit volumique de gaz d'échappement traversant le filtre à particules,
   b) détermination du point d'intersection (14 ; 16) de la courbe (18 ; 20) de perte de charge avec une courbe (22) de charge du moteur, de préférence une courbe de pleine charge,
   c) comparaison de la perte de charge du point d'intersection avec une perte de charge seuil.

2. Procédé selon la revendication 1, dans lequel l'étape a) est mise en oeuvre après une étape de régénération du filtre à particules.

3. Procédé selon la revendication 2, dans lequel l'étape a) est mise en oeuvre périodiquement, après un nombre déterminé de régénérations du filtre à particules.

4. Procédé selon la revendication 2 ou 3, dans lequel l'étape de régénération peut présenter soit une première durée, soit une deuxième durée, plus longue que la première durée, et dans lequel l'étape a) est mise en oeuvre après une étape de régénération d'une deuxième durée.

5. Procédé selon l'une des revendications 1 à 4, dans lequel l'étape a) comprend les sous-étapes consistant à :

aa) déterminer des couples (10 ; 12) de perte de charge en fonction du débit volumique de gaz d'échappement traversant le filtre à particules,
ab) déterminer la courbe de perte de charge (18 ; 20) par régression linéaire du type :

$$\Delta P = A.Q_{vol}^2 + B.Q_{vol},$$

où $\Delta P$ représente la perte de charge, $Q_{vol}$ le débit volumique de gaz d'échappement traversant le filtre à particules et A et B des constantes à déterminer par régression linéaire.

6. Procédé selon la revendication 5, dans lequel pour déterminer la courbe (18 ; 20) de perte de charge par régression linéaire, on détermine des couples successifs (10 ; 12) de perte de charge en fonction du débit volumique de gaz d'échappement traversant le filtre à particules $Q_{vol_i};\Delta P_i$, et pour chaque couple $Q_{vol_n};\Delta P_n$, on détermine les coefficients $A_n$ et $B_n$ correspondant, par exemple en appliquant les équations suivantes :

$$A_n = \frac{n \cdot \sum \Delta P_i - \sum Q_{vol_i} \cdot \sum \left(\Delta P_i / Q_{vol_i}\right)}{n \cdot \sum Q_{vol_i}^2 - \left(\sum Q_{vol_i}\right)^2},$$

et

$$B_n = \frac{\left(\sum Q_{vol_i}^2\right) \cdot \sum \left(\Delta P_i / Q_{vol_i}\right) - \sum Q_{vol_i} \cdot \sum \Delta P_i}{n \cdot \sum Q_{vol_i}^2 - \left(\sum Q_{vol_i}\right)^2}.$$

7. Procédé selon la revendication 6, dans lequel pour chaque couple de coefficients $A_n$, $B_n$, on détermine le point d'intersection de la courbe (18 ; 20) de perte de charge correspondante avec la courbe (22) de charge moteur.

8. Procédé selon l'une quelconque des revendications précédentes, dans lequel la courbe de charge moteur est de la forme $\Delta P = \dfrac{C}{Q_{vol}} + D$ où C et D sont des constantes.

9. Procédé selon les revendications 7 et 8, dans lequel le point d'intersection (14 ; 16) de chaque courbe de perte de charge (18 ; 20) avec la courbe charge moteur (22) est déterminé en résolvant, par exemple au moyen des formules de Cardan, l'équation :

$$A_n \cdot Q_{vol}^3 + B_n \cdot Q_{vol}^2 - D \cdot Q_{vol} - C = 0.$$

10. Dispositif de détermination de l'état d'encrassement d'un filtre à particules d'une ligne d'échappement d'un moteur de véhicule automobile, comprenant :

- des moyens de détermination de la perte de charge dans le filtre à particules en fonction du débit volumique de gaz d'échappement traversant le filtre à particules,
- une unité électronique de commande reliée fonctionnellement aux moyens de détermination et spécialement adaptée pour mettre en oeuvre le procédé selon l'une quelconque des revendications précédentes.

**Patentansprüche**

1. Verfahren zum Bestimmen des Verschmutzungszustands eines Partikelfilters, das in der Abgasleitung einer Brennkraftmaschine eingerichtet ist, **dadurch gekennzeichnet, dass** es die folgenden aufeinander folgenden Schritte aufweist:

    a) Bestimmen einer Lastverlustkurve (18; 20) des Partikelfilters in Abhängigkeit von dem Abgasvolumenstrom, der das Partikelfilter durchquert,
    b) Bestimmen des Schnittpunktes (14; 16) der Lastverlustkurve (18; 20) mit einer Lastkurve (22) des Motors, vorzugsweise eine Vollastkurve,
    c) Vergleichen des Lastverlusts der Schnittstelle mit einem Schwellenlastverlust.

2. Verfahren nach Anspruch 1, bei dem der Schritt a) nach einem Regenerationsschritt des Partikelfilters ausgeführt wird.

3. Verfahren nach Anspruch 2, bei dem der Schritt a) periodisch nach einer bestimmten Anzahl von Regenerationen des Partikelfilters umgesetzt wird.

4. Verfahren nach Anspruch 2 oder 3, bei dem der Regenerationsschritt entweder eine erste Dauer oder eine zweite Dauer, die länger ist als die erste Dauer, aufweisen kann, und bei dem Schritt a) nach einem Regenerationsschritt einer zweiten Dauer umgesetzt wird.

5. Verfahren nach einem der Ansprüche 1 bis 4, bei dem der Schritt a) die Unterschritte aufweist, die aus Folgendem bestehen:

    aa) Bestimmen der Lastverlustpaare (10; 12) in Abhängigkeit von dem Abgasvolumenstrom, der das Partikelfilter durchquert,
    ab) Bestimmen der Lastverlustkurve (18; 20) durch lineare Regression des Typs:

$$\Delta P = A.Q_{vol}^{2} + B.Q_{vol} \text{ ,}$$

wobei $\Delta_P$ den Lastverlust darstellt, $Q_{vol}$ den Abgasvolumenstrom, der das Partikelfilter durchquert, und A und B Konstanten, die durch lineare Regression zu bestimmen sind, darstellen.

6. Verfahren nach Anspruch 5, bei dem man zum Bestimmen der Lastverlustkurve (18; 20) durch lineare Regression die aufeinander folgenden Paare (10; 12) Lastverlust in Abhängigkeit von dem Abgasvolumenstrom, der das Partikelfilter durchquert $Q_{vol\,i}$;$\Delta P_i$ bestimmt und für jedes Paar $Q_{vol\,n}$;$\Delta P_n$ die entsprechenden Koeffizienten $A_n$ und $B_n$ bestimmt, zum Beispiel durch Anwenden der folgenden Gleichungen:

$$A_n = \frac{n.\sum \Delta P_i - \sum Q_{vol_i} . \sum (\Delta P_i / Q_{vol_i})}{n.\sum Q_{vol_i}^2 - (\sum Q_{vol_i})^2}$$

und

$$B_n = \frac{\sum Q_{vol_i}^2 ) . \sum \Delta P_i / Q_{vol_i}) - \sum Q_{vol_i} . \sum \Delta P_i}{n . \sum Q_{vol_i}^2 - (\sum Q_{vol_i})^2} .$$

7. Verfahren nach Anspruch 6, bei dem man für jedes Koeffizientenpaar $A_n$, $B_n$ den Schnittpunkt der entsprechenden Lastverlustkurve (18; 20) mit der Motorlastkurve (22) bestimmt.

8. Verfahren nach einem der vorhergehenden Ansprüche, bei dem die Motorlastkurve die Form $\Delta P = \dfrac{C}{Q_{vol}} + D$ hat, wobei C und D Konstanten sind.

9. Verfahren nach den Ansprüchen 7 und 8, bei dem der Schnittpunkt (14; 16) jeder Lastverlustkurve (18; 20) mit der Motorlastkurve (22) bestimmt wird, indem zum Beispiel anhand der cardanischen Formeln, die folgende Gleichung gelöst wird:

$$A_n . Q_{vol}^3 + B_n . Q_{vol}^2 - D . Q_{vol} - C = 0$$

10. Vorrichtung zum Bestimmen des Verschmutzungszustands eines Partikelfilters einer Abgasleitung eines Kraftfahrzeugmotors, die Folgendes aufweist:

   - Mittel zum Bestimmen des Lastverlusts in den Partikelfiltern in Abhängigkeit vom Abgasvolumenstrom, der das Partikelfilter durchquert,
   - eine elektronische Steuereinheit, die funktional mit den Bestimmungsmitteln verbunden und speziell angepasst ist, um das Verfahren nach einem der vorhergehenden Ansprüche anzuwenden.

**Claims**

1. A method for determining the clogging status of a particle filter arranged in the exhaust line of an internal combustion engine, **characterized in that** it includes the following successive steps:

   a) determination of a curve (18 ; 20) of loss of loads of the particle filter as a function of the volume flow of exhaust gas passing through the particle filter,
   b) determination of the point of intersection (14; 16) of the load loss curve (18; 20) with a load curve (22) of the engine, preferably a full load curve,
   c) comparison of the load loss of the point of intersection with a threshold load loss.

2. The method according to Claim 1, in which the step a) is implemented after a step of regeneration of the particle filter.

3. The method according to Claim 2, in which the step a) is implemented periodically, after a determined number of regenerations of the particle filter.

4. The method according to Claim 2 or 3, in which regeneration step can present either a first duration, or a second duration, longer than the first duration, and in which step a) is implemented after a regeneration step of a second duration.

5. The method according to one of Claims 1 to 4, in which step a) includes the sub-steps consisting of:

   aa) determining pairs (10; 12) of load loss as function of the volume flow of exhaust gas passing through the particle filter,
   ab) determining the load loss curve (18; 20) by linear regression of the type:

$$\Delta P = A.Q_{vol}^2 + B.Q_{vol} \, ,$$

where $\Delta P$ represents the load loss, $Q_{vol}$ the volume flow of exhaust gas passing through the particle filter and A and B constants for determining by linear regression.

6. The method according to Claim 5, in which to determine the load loss curve (18; 20) by linear regression, successive load loss pairs (10; 12) are determined as a function of the volume flow of exhaust gas passing through the particle filter $Q_{vol_i};\Delta P_i$, and for each pair $Q_{vol_n}$ ; $\Delta P_n$ the corresponding $A_n$ and $B_n$ coefficients are determined, for example by applying the following equations:

$$A_n = \frac{n \cdot \sum \Delta P_i - \sum Q_{vol_i} \cdot \sum \left( \Delta P_i / Q_{vol_i} \right)}{n \cdot \sum Q_{vol_i}^2 - \left( \sum Q_{vol_i} \right)^2} \, ,$$

and

$$B_n = \frac{\left( \sum Q_{vol_i}^2 \right) \cdot \sum \left( \Delta P_i / Q_{vol_i} \right) - \sum Q_{vol_i} \cdot \sum \Delta P_i}{n \cdot \sum Q_{vol_i}^2 - \left( \sum Q_{vol_i} \right)^2} \, .$$

7. The method according to Claim 6, in which for each pair of coefficients $A_n$, $B_n$, the point of intersection of the corresponding load loss curve (18 ; 20) with the engine load curve (22) is determined.

8. The method according to any one of the preceding claims, in which the engine load curve is of the form

$$\Delta P = \frac{C}{Q_{vol}} + D$$

in which C and D are constants.

9. The method according to Claims 7 and 8, in which the point of intersection (14; 16) of each load loss curve (18; 20) with the engine load curve (22) is determined by solving, for example by means of Cardan's formulae, the equation:

$$A_n \cdot Q_{vol}^3 + B_n \cdot Q_{vol}^2 - D \cdot Q_{vol} - C = 0 \, .$$

10. A device for determining the clogging status of a particle filter of an exhaust line of a motor vehicle engine, including:

- means for determination of the load loss in the particle filter as a function of the volume flow of exhaust gas passing through the particle filter,
- an electronic control unit functionally connected to the determination means and especially adapted to implement the method according to any one of the preceding claims.

Figure unique

## RÉFÉRENCES CITÉES DANS LA DESCRIPTION

### Documents brevets cités dans la description

- FR 2927363 A
- WO 9923369 A
- US 20110146246 A1